# EUROPÄISCHE PATENTANMELDUNG

(11) **EP 4 563 410 A1**
(43) Veröffentlichungstag der Anmeldung: **04.06.2025**
(21) Anmeldenummer: 23213384.3
(22) Anmeldetag: 30.11.2023
(51) Int. Cl.: B60P 7/14, B60R 5/04, B60R 21/13, B60P 3/40

(54) **KRAFTFAHRZEUG MIT ÜBERROLLBÜGEL**

(71) Anmelder: MAGNA STEYR Fahrzeugtechnik GmbH & Co KG, 8041 Graz (AT)
(72) Erfinder: HÖRMANN, Reinhard, 8054 Seiersberg (AT)
(74) Vertreter: Zangger, Bernd

(57) **Zusammenfassung**

Ein Kraftfahrzeug, insbesondere Pickup, umfassend eine oben offene Ladefläche (1), begrenzt durch Seitenwände (2), eine Vorderwand (3) und eine Hinterwand (4), wobei das Kraftfahrzeug einen Überrollbügel (5) umfasst, wobei der Überrollbügel (5) zumindest eine Begrenzungswand (6) aufweist, wobei die Begrenzungswand (6) des Überrollbügels (5) in einem Überrollbügel-Modus eine oben, vorne oder hinten am Überrollbügel (5) angeordnete Fläche bildet, die sich im Wesentlichen über die gesamte Breite des Kraftfahrzeugs erstreckt, wobei der Überrollbügel (5) im Überrollbügel-Modus zumindest eine unten am Überrollbügel (5) angeordnete Montagebasis (7) aufweist, wobei der Überrollbügel (5) im Überrollbügel-Modus in einem vorderen Bereich der Ladefläche (1) angeordnet und die Montagebasis (7) des Überrollbügels (5) im Bereich der Oberkante (8) der Seitenwände (2) montiert ist, wobei der Überrollbügel (5) und das übrige Kraftfahrzeug Montageelemente aufweisen, die dazu ausgebildet sind, dass der Überrollbügel (5) vom Benutzer des Kraftfahrzeugs auf einfache Weise aus dem Überrollbügel-Modus demontiert und in zumindest einem, bevorzugt zumindest zwei oder alle drei, der folgenden Modi montiert werden kann: einen Trennelement-Modus, einen Laderaumerweiterungs-Modus, einen Ablage-Modus.

## Beschreibung

### Gebiet der Erfindung

Die vorliegende Erfindung betrifft ein Kraftfahrzeug, insbesondere Pickup, umfassend eine oben offene Ladefläche und einen Überrollbügel.

### Stand der Technik

Es ist bekannt, dass Kraftfahrzeuge eine oben offene Ladefläche aufweisen können, die in Fahrtrichtung hinter einer geschlossenen Kabine für den Fahrer und für Fahrgäste liegen kann. Solche Fahrzeuge sind insbesondere als "Pickups" oder "Pickup-Trucks" bekannt.

Es ist bekannt, dass Fahrzeuge, insbesondere Fahrzeuge, die zumindest abschnittsweise kein Dach aufweisen, einen Überrollbügel verwenden können, der bei einem Überschlag bewirken kann, dass ein Überlebensraum für Insassen des Fahrzeugs bestehen bleibt und/oder verhindern kann, dass ein Dach zu sehr eingedrückt wird.

Solche Überrollbügel sind üblicherweise fest und stabil mit der tragenden Struktur des Kraftfahrzeugs verbunden. Ein Entfernen eines beispielsweise die Beladung der Ladefläche störenden Überrollbügels ist nicht vorgesehen.

Es ist bekannt die Ladefläche eines Pickups in beispielsweise zwei Bereiche zu trennen, in dem eine Trennwand auf der Ladefläche geeignet aufgestellt und befestigt wird. Die Trennwand kann dann, wenn diese gerade nicht verwendet wird, beispielsweise im Fahrzeug verstaut und mitgeführt werden. Dies benötigt zusätzlichen Platz zum Verstauen im Fahrzeug.

Die Ladefläche eines Pickups kann in Fahrtrichtung hinten eine Hecklappe als Hinterwand aufweisen. Eine solche Heckklappe kann beispielsweise an deren Unterseite ein Scharnier aufweisen und durch Schwenken nach unten geöffnet werden, beispielsweise um die Ladefläche einfacher zu beladen. Bei geöffneter Heckklappe besteht insbesondere bei Fahrt des Kraftfahrzeugs die Gefahr, dass Ladegut von der Ladefläche verloren wird.

### Zusammenfassung der Erfindung

Es ist eine Aufgabe der Erfindung, ein Kraftfahrzeug, insbesondere einen Pickup, umfassend eine oben offene Ladefläche und einen Überrollbügel anzugeben, das zumindest einige der oben genannten Probleme vermeidet. Insbesondere soll der Überrollbügel zusätzlich zu einer Funktion als Überrollschutz eine oder mehrere Zusatzfunktionen übernehmen.

Die Lösung der Aufgabe erfolgt durch ein Kraftfahrzeug, insbesondere einen Pickup, umfassend eine oben offene Ladefläche, begrenzt durch Seitenwände, eine Vorderwand und eine Hinterwand, wobei das Kraftfahrzeug einen Überrollbügel umfasst, wobei der Überrollbügel zumindest eine Begrenzungswand aufweist, wobei die Begrenzungswand des Überrollbügels in einem Überrollbügel-Modus eine oben, vorne oder hinten am Überrollbügel angeordnete Fläche bildet, die sich im Wesentlichen über die gesamte Breite des Kraftfahrzeugs - also in y-Richtung des Kraftfahrzeugs - erstreckt, wobei der Überrollbügel im Überrollbügel-Modus zumindest eine unten am Überrollbügel angeordnete Montagebasis aufweist, wobei der Überrollbügel im Überrollbügel-Modus in einem vorderen Bereich der Ladefläche angeordnet und die Montagebasis des Überrollbügels im Bereich der Oberkante der Seitenwände montiert ist,
wobei der Überrollbügel und das übrige Kraftfahrzeug Montageelemente aufweisen, die dazu ausgebildet sind, dass der Überrollbügel vom Benutzer des Kraftfahrzeugs auf einfache Weise aus dem Überrollbügel-Modus demontiert und in zumindest einem, bevorzugt zumindest zwei oder alle drei, der folgenden Modi montiert werden kann:
einen Trennelement-Modus, wobei im Trennelement-Modus die Begrenzungswand des Überrollbügels eine vertikale Trennwand oberhalb der Ladefläche bildet und die Montagebasis des Überrollbügels hinter der Begrenzungswand, bevorzugt in einem hinteren Bereich der Seitenwände, montiert ist;
einen Laderaumerweiterungs-Modus, wobei im Laderaumerweiterungs-Modus die Begrenzungswand des Überrollbügels eine vertikale Trennwand oberhalb einer die Ladefläche nach hinten erweiternden Erweiterungsfläche, bevorzugt der geöffneten Heckklappe, bildet und die Montagebasis des Überrollbügels vor der Begrenzungswand, bevorzugt in einem hinteren Bereich der Seitenwände, montiert ist;
einen Ablage-Modus, wobei im Ablage-Modus die Begrenzungswand des Überrollbügels eine vertikale Wand oberhalb der Ladefläche und direkt benachbart der Vorderwand der Ladefläche bildet und die Montagebasis des Überrollbügels hinter der Begrenzungswand, bevorzugt an den Seitenwänden, montiert ist.

Erfindungsgemäß ist ein Kraftfahrzeug mit einem Überrollbügel ausgestattet, der dazu ausgebildet ist, aus seiner üblichen Position und Verwendung als Überrollbügel entfernt zu werden und in zumindest einer anderen Position und Funktion eingesetzt zu werden. Der Überrollbügel ist daher mit Montageelementen am übrigen Kraftfahrzeug befestigt, die es für einen Benutzer des Fahrzeugs ermöglichen, den Überrollbügel entsprechend zu demontieren und zu montieren, bevorzugt, ohne ein Werkzeug verwenden zu müssen. Am Überrollbügel sind die Montageelemente durch die Montagebasis und/oder durch weitere Befestigungselemente ausgebildet, die mit der Montagebasis zusammenwirken. Am Kraftfahrzeug sind entsprechende Montagepunkte ausgebildet, die eine Montage des Überrollbügels in zwei, drei oder allen vier genannten Positionen ermöglichen.

Die zusätzlichen Modi des Überrollbügels können sein:
Ein Trennelement-Modus, wobei im Trennelement-Modus die Begrenzungswand des Überrollbügels eine vertikale Trennwand oberhalb, bevorzugt unmittelbar oberhalb, der Ladefläche bildet und die Montagebasis des Überrollbügels hinter der Begrenzungswand, bevorzugt in einem hinteren Bereich der Seitenwände, montiert ist. In diesem Modus dient der Überrollbügel der Abtrennung eines Bereichs der Ladefläche von einem anderen Bereich der Ladefläche - ähnlich einer üblichen Trennwand. Die Trennwand kann aber ebenso entfernt und als Überrollbügel eingesetzt werden. Die Trennwand, nämlich der Überrollbügel, ist im Trennelement-Modus am Kraftfahrzeug befestigt, insbesondere an den Seitenwänden, die die Ladefläche begrenzen.

Ein Laderaumerweiterungs-Modus, wobei im Laderaumerweiterungs-Modus die Begrenzungswand des Überrollbügels eine vertikale Trennwand oberhalb, bevorzugt unmittelbar oberhalb, einer die Ladefläche nach hinten erweiternden Erweiterungsfläche, bevorzugt der geöffneten Heckklappe, bildet und die Montagebasis des Überrollbügels vor der Begrenzungswand, bevorzugt in einem hinteren Bereich der Seitenwände, montiert ist. Im Laderaumerweiterungs-Modus ist der Überrollbügel im Vergleich zum Trennelement-Modus an einer vertikalen Achse um 180 Grad gedreht, so dass die Begrenzungswand hinten liegt, anstatt vorne. Die Begrenzungswand kann dadurch die Erweiterungsfläche, bevorzugt die geöffnete Heccklappe, hinten vertikal begrenzen und somit den Verlust von Waren nach hinten verhindern.

Ein Ablage-Modus, wobei im Ablage-Modus die Begrenzungswand des Überrollbügels eine vertikale Wand oberhalb, bevorzugt unmittelbar oberhalb der Ladefläche und direkt benachbart der Vorderwand der Ladefläche bildet und die Montagebasis des Überrollbügels hinter der Begrenzungswand, bevorzugt an den Seitenwänden, montiert ist. Im Ablage-Modus ist der Überrollbügel platzsparend abgelegt. Je nach Ausbildung, kann durch die Begrenzungswand des Überrollbügels im Ablage-Modus die Vorderwand der Ladefläche verstärkt werden.

Die Begriffe "vorne", "hinten", "oben" und "unten" beziehen sich im Rahmen dieser Schrift immer auf das Kraftfahrzeug und seine gewöhnliche Fahrtrichtung bei Vorwärtsfahrt nach vorne.

Vorzugsweise weist der Überrollbügel in einer Seitenansicht auf das Kraftfahrzeug eine Dreiecksform auf, wobei bevorzugt die Begrenzungswand des Überrollbügels in dem Überrollbügel-Modus eine vorne am Überrollbügel angeordnete Fläche bildet.

In einer anderen Ausführungsform weist der Überrollbügel in einer Seitenansicht auf das Kraftfahrzeug eine Viereckform auf, also insbesondere die Form eines Rechtsecks oder Quadrats, wobei bevorzugt die Begrenzungswand des Überrollbügels in dem Überrollbügel-Modus eine oben am Überrollbügel angeordnete Fläche bildet.

Bevorzugt ist im Trennelement-Modus und/oder im Laderaumerweiterungs-Modus und/oder im Ablage-Modus die Montagebasis des Überrollbügels unmittelbar oder mittelbar an den die Ladefläche begrenzenden Seitenwänden montiert und/oder an der Ladefläche. Die Montagebasis des Überrollbügels kann beispielsweise Befestigungsflansche aufweisen. Die Montagebasis kann beispielsweise für eine Steckverbindung und/oder für eine Verschraubung ausgebildet sein.

Die Montagebasis des Überrollbügels kann zumindest einen Befestigungspunkt zur Montage des Überrollbügels am übrigen Kraftfahrzeug umfassen oder zumindest einen linken und einen rechten Befestigungspunkt, bevorzugt umfasst sie mehrere Befestigungspunkte zur Montage des Überrollbügels an dessen unteren Ende am übrigen Kraftfahrzeug oder alle Befestigungspunkte zur Montage des Überrollbügels an dessen unteren Ende am übrigen Kraftfahrzeug oder alle Befestigungspunkte zur Montage des Überrollbügels am übrigen Kraftfahrzeug.

Im Laderaumerweiterungs-Modus kann die, die Ladefläche nach hinten erweiternde Erweiterungsfläche, durch eine geöffnete Heckklappe des Kraftfahrzeugs gebildet sein.

Vorzugsweise ist die Längserstreckung der Begrenzungswand des Überrollbügels, die im Kraftfahrzeug in jedem Verwendungsmodus des Überrollbügels in y-Richtung ausgerichtet ist, einstellbar, zumindest zwischen zwei oder drei vorgegebenen, bevorzugt einrastenden, Längen.

Der Überrollbügel kann Seitenteile aufweisen und zumindest einen Mittelteil, wobei der Mittelteil gegenüber den Seitenteilen verschieblich gelagert sein kann.

Bevorzugt umfassen die Seitenteile zumindest ein Rohr und/oder zumindest eine Fläche und der Mittelteil umfasst ebenfalls zumindest ein Rohr und/oder zumindest eine Fläche. Das Rohr des Mittelteils kann gegenüber den Rohren der Seitenteile unterschiedlichen Radius aufweisen und hierdurch gegeneinander verschieblich gelagert sein und/oder die Fläche des Mittelteils oder die Fläche der Seitenteile kann hohl ausgeführt sein und hierdurch gegeneinander verschieblich gelagert sein, da eine Fläche (Seitenteile oder Mittelteil) innerhalb der holen anderen Fläche (Mittelteil oder Seitenteile) angeordnet sein kann.

### Kurzbeschreibung der Zeichnungen

Die Erfindung wird im Folgenden beispielhaft unter Bezugnahme auf die Zeichnungen beschrieben.
- Fig. 1: ist eine schematische seitliche Darstellung eines erfindungsgemäßen Kraftfahrzeugs in einer ersten Ausführungsform, im Überrollbügel-Modus.
- Fig. 2: ist eine schematische seitliche Darstellung des erfindungsgemäßen Kraftfahrzeugs gemäß Fig. 1, im Trennelement-Modus.
- Fig. 3: ist eine schematische seitliche Darstellung des erfindungsgemäßen Kraftfahrzeugs gemäß Fig. 1, im Ablage-Modus.
- Fig. 4: ist eine schematische seitliche Darstellung des erfindungsgemäßen Kraftfahrzeugs gemäß Fig. 1, im Laderaumerweiterungs-Modus.
- Fig. 5: ist eine schematische seitliche Darstellung eines erfindungsgemäßen Kraftfahrzeugs in einer zweiten Ausführungsform, im Überrollbügel-Modus.
- Fig. 6: ist eine schematische seitliche Darstellung des erfindungsgemäßen Kraftfahrzeugs gemäß Fig. 5, im Trennelement-Modus.
- Fig. 7: ist eine schematische seitliche Darstellung des erfindungsgemäßen Kraftfahrzeugs gemäß Fig. 5, im Ablage-Modus.
- Fig. 8: ist eine schematische seitliche Darstellung des erfindungsgemäßen Kraftfahrzeugs gemäß Fig. 5, im Laderaumerweiterungs-Modus.
- Fig. 9: ist eine schematische dreidimensionale Darstellung eines Überrollbügels des erfindungsgemäßen Kraftfahrzeugs gemäß Fig. 1 bis Fig. 4.

### Detaillierte Beschreibung der Erfindung

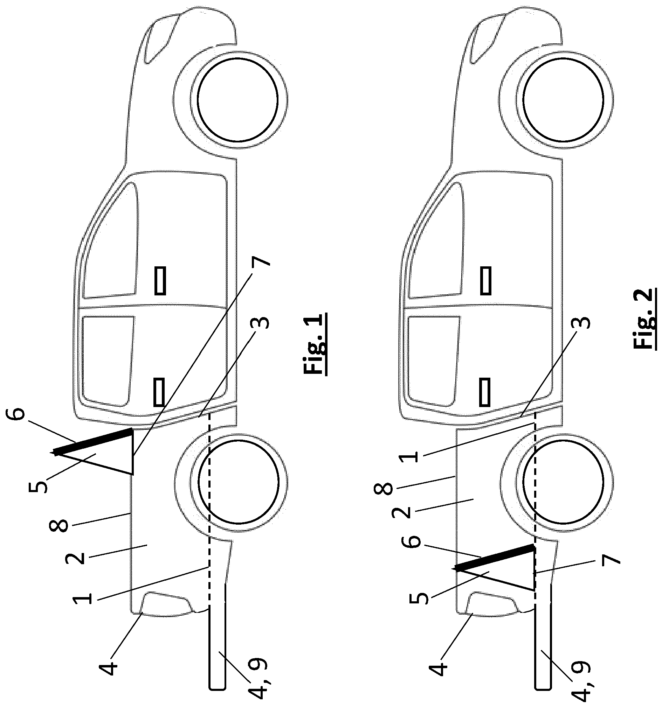

In den Fig. 1-4 ist ein erfindungsgemäßes Kraftfahrzeug in einer ersten Ausführungsform dargestellt.

Das Kraftfahrzeug ist ein Pickup mit einer oben offenen Ladefläche 1 im hinteren Bereich des Fahrzeugs, die in den Fig. jeweils links dargestellt ist. Die Ladefläche 1 wird begrenzt durch Seitenwände 2, eine Vorderwand 3 und eine Hinterwand 4, die auch eine öffenbare Heckklappe 9 umfasst. Die Heckklappe 9 ist in den Fig. 1-8 geöffnet dargestellt.

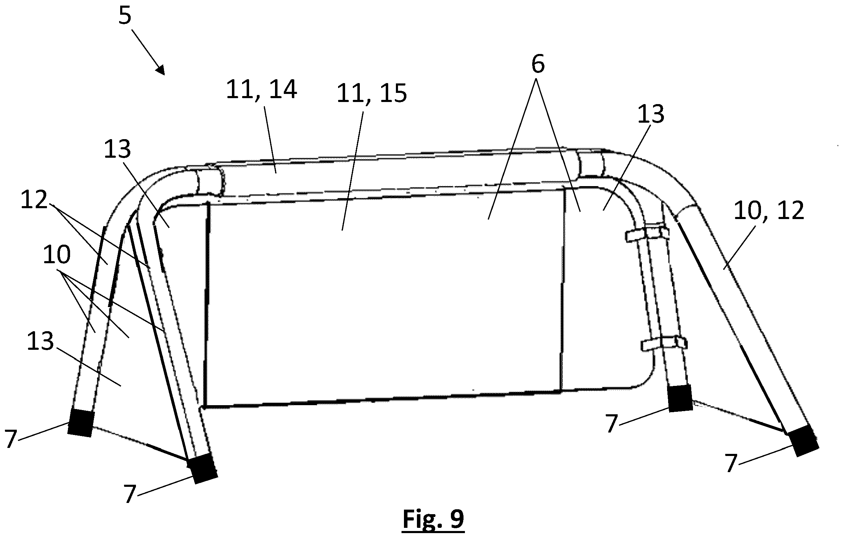

Das Kraftfahrzeug umfasst einen Überrollbügel 5. Der Überrollbügel 5 weist in einer Seitenansicht - wie in den Fig. 1-4 dargestellt - eine Dreiecksform auf. Der Überrollbügel 5 ist in der Fig. 9 genauer dargestellt.

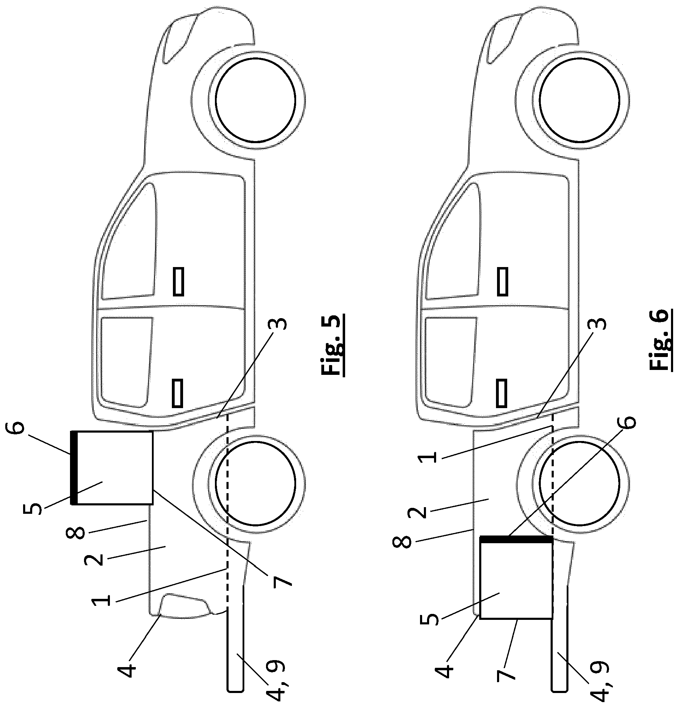

In den Fig. 5 - 8 ist eine andere Ausführungsform eines Überrollbügels 5 dargestellt. Der Überrollbügel 5 weist in einer Seitenansicht auf das Kraftfahrzeug eine Viereckform auf. Die Begrenzungswand 6 des Überrollbügels 5 ist in dem Überrollbügel-Modus dieser Ausführungsform (Fig. 5) eine oben am Überrollbügel 5 angeordnete Fläche.

Der Überrollbügel 5 weist eine Begrenzungswand 6 auf, wobei die Begrenzungswand 6 des Überrollbügels 5 in dem in Fig. 1 dargestellten Überrollbügel-Modus eine vorne am Überrollbügel 5 angeordnete Fläche bildet, die sich im Wesentlichen über die gesamte Breite des Kraftfahrzeugs erstreckt. Die Begrenzungswand 6 kann auch oben am Überrollbügel 5 ausgebildet sein, insbesondere in einem viereckigen Überrollbügel 5 - wie in Fig. 5 dargestellt.

Der Überrollbügel 5 weist zudem eine Montagebasis 7 auf, die sich im Überrollbügel-Modus unten am Überrollbügel 5 befindet.

Der Überrollbügel 5 ist im Überrollbügel-Modus in einem vorderen Bereich der Ladefläche 1, nahe dem vorderen Ende der Ladefläche 1, angeordnet. Die Montagebasis 7 des Überrollbügels 5 ist im Bereich der Oberkanten 8 der Seitenwände 2 an den Seitenwänden 2 montiert.

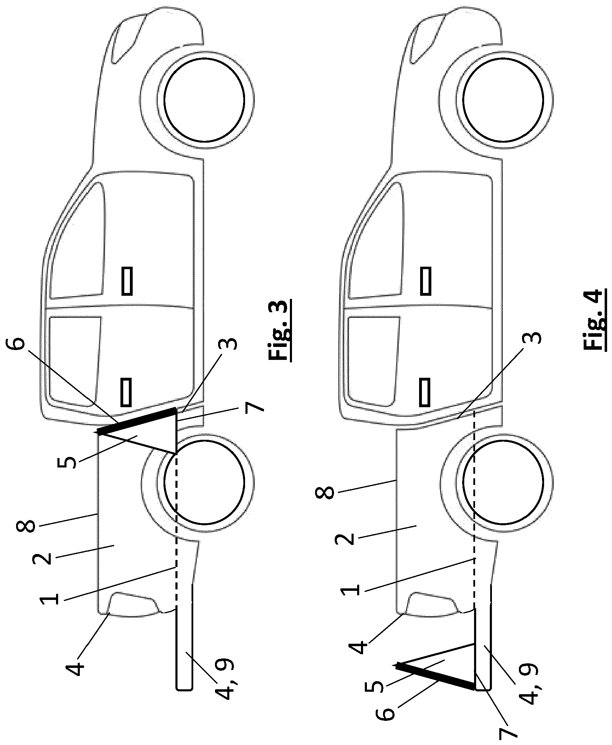

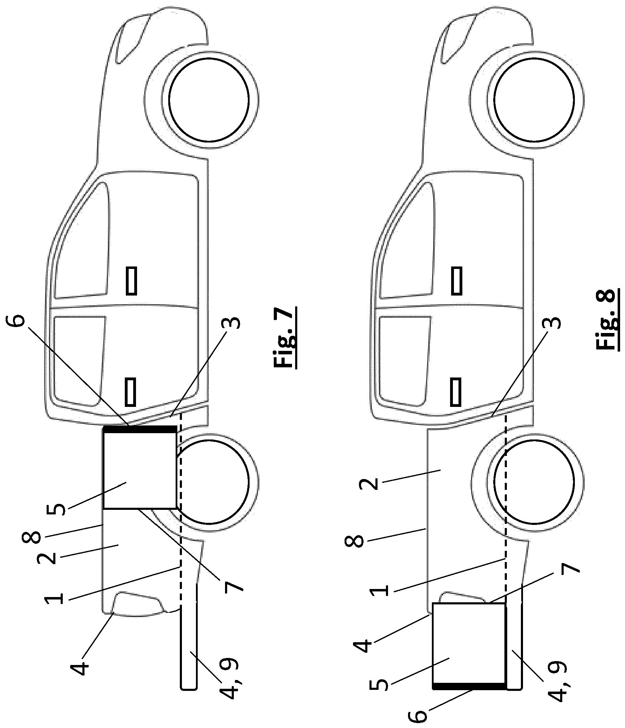

Der Überrollbügel 5 und das übrige Kraftfahrzeug weisen Montageelemente auf, die dazu ausgebildet sind, dass der Überrollbügel 5 vom Benutzer des Kraftfahrzeugs auf einfache Weise aus dem Überrollbügel-Modus demontiert und in zumindest einem, bevorzugt zumindest zwei oder alle drei, der in den Fig. 2 und Fig. 6, Fig. 3 und Fig. 7, sowie in Fig. 4 und Fig. 8 dargestellten Modi und somit Positionen montiert werden kann.

Fig. 2 und Fig. 6 zeigen jeweils einen Trennelement-Modus, wobei im Trennelement-Modus die Begrenzungswand 6 des Überrollbügels 5 eine vertikale Trennwand oberhalb der Ladefläche 1, an die Ladefläche 1 anschließend, bildet und die Montagebasis 7 des Überrollbügels 5 in Fahrtrichtung hinter der Begrenzungswand 6 montiert ist. Die Montagebasis 7 befindet sich im Trennelement-Modus bei einem dreieckigen Überrollbügel 5, gemäß Fig. 2, unten und kann bei einem Überrollbügel 5 mit im Überrollbügel-Modus oben liegender Begrenzungswand 6, hinten liegen (Fig. 6).

Fig. 3 und Fig. 7 zeigen jeweils einen Ablage-Modus, wobei im Ablage-Modus die Begrenzungswand 6 des Überrollbügels 5 eine vertikale Wand oberhalb der Ladefläche 1 und direkt benachbart der Vorderwand 3 der Ladefläche 1 bildet. Die Begrenzungswand 6 kann zumindest abschnittsweise so nahe an der Vorderwand 3 liegen, dass sie die Vorderwand 3 verstärkt. Die Montagebasis 7 des Überrollbügels 5 ist hinter der Begrenzungswand 6 montiert - unten (Fig. 3) oder hinten (Fig. 7) am Überrollbügel 5 im Kraftfahrzeug angeordnet.

Die Fig. 4 und Fig. 8 zeigen jeweils die Verwendung eines Überrollbügels 5 in einem Laderaumerweiterungs-Modus, wobei im Laderaumerweiterungs-Modus die Begrenzungswand 6 des Überrollbügels 5 eine vertikale Trennwand unmittelbar oberhalb einer die Ladefläche 1 nach hinten erweiternden Erweiterungsfläche 9 bildet und die Montagebasis 7 des Überrollbügels 5 vor der Begrenzungswand 6 montiert ist.

Die die Ladefläche 1 nach hinten erweiternde Erweiterungsfläche 9 kann durch eine geöffnete Heckklappe des Kraftfahrzeugs gebildet sein.

Die Montagebasis 7 des Überrollbügels 5 kann im Trennelement-Modus und/oder im Laderaumerweiterungs-Modus und/oder im Ablage-Modus unmittelbar oder mittelbar an den die Ladefläche 1 begrenzenden Seitenwänden 2 und/oder an der Ladefläche 1 des Kraftfahrzeugs montiert sein.

Fig. 9 zeigt schließlich eine Ausführung eines Überrollbügels 5 genauer. Die Längserstreckung der Begrenzungswand 6 des Überrollbügels 5, die im Kraftfahrzeug in y-Richtung liegt, ist einstellbar zwischen mehreren vorgegebenen und einrastenden Längen.

Der Überrollbügel 5 weist dazu Seitenteile 10 links und rechts eines Mittelteil 11 auf, wobei der Mittelteil 11 gegenüber den Seitenteilen 10 verschieblich gelagert ist.

Die Seitenteile 10 sind jeweils durch Rohre 12 und optional eine Fläche 13 gebildet. Der Mittelteil 11 ist ebenfalls durch Rohre 14, bevorzugt zwei nebeneinander angeordnete Rohre 14, und optional eine Fläche 15 gebildet. Die Rohre 14 des Mittelteils 11 sind gegenüber den Rohren 12 der Seitenteile 10 mit unterschiedlichen Radien ausgebildet und können hierdurch ineinander liegend, gegeneinander verschoben werden. Mittels Bohrungen und Raststiften am außenliegenden bzw. innenliegenden Teil, oder umgekehrt, können vorgegebene Längen auf einfache Weise einstellbar sein. Ebenso können die Fläche 15 des Mittelteils 11 oder die Flächen 13 der Seitenteile 10 hohl ausgeführt sein und das oder die jeweils anderen Flächenteile in diesem Hohlteil angeordnet und somit axial gegeneinander verschieblich gelagert sein. Auch die Flächenteile können eine Verrastung von Positionen, beispielsweise mittels Bohrungen und Raststiften, aufweisen.

Ein Überrollbügel 5 kann somit dazu vorbereitet sein, auf einfache Weise in zumindest zwei verschiedene Längen verstellt zu werden, die zumindest zwei verschiedenen der beschriebenen Modi des Überrollbügels 5 zugeordnet sind und somit an unterschiedliche abzudeckende Breiten im Kraftfahrzeug optimal angepasst sind.

### Bezugszeichenliste

- 1: Ladefläche
- 2: Seitenwand
- 3: Vorderwand
- 4: Hinterwand
- 5: Überrollbügel
- 6: Begrenzungswand
- 7: Montagebasis
- 8: Oberkante
- 9: Erweiterungsfläche
- 10: Seitenteil
- 11: Mittelteil
- 12: Rohr des Seitenteils
- 13: Fläche des Seitenteils
- 14: Rohr des Mittelteils
- 15: Fläche des Mittelteils

## Patentansprüche

1. Kraftfahrzeug, insbesondere Pickup, umfassend eine oben offene Ladefläche (1), begrenzt durch Seitenwände (2), eine Vorderwand (3) und eine Hinterwand (4), wobei das Kraftfahrzeug einen Überrollbügel (5) umfasst, wobei der Überrollbügel (5) zumindest eine Begrenzungswand (6) aufweist, wobei die Begrenzungswand (6) des Überrollbügels (5) in einem Überrollbügel-Modus eine oben, vorne oder hinten am Überrollbügel (5) angeordnete Fläche bildet, die sich im Wesentlichen über die gesamte Breite des Kraftfahrzeugs erstreckt, wobei der Überrollbügel (5) im Überrollbügel-Modus zumindest eine unten am Überrollbügel (5) angeordnete Montagebasis (7) aufweist, wobei der Überrollbügel (5) im Überrollbügel-Modus in einem vorderen Bereich der Ladefläche (1) angeordnet und die Montagebasis (7) des Überrollbügels (5) im Bereich der Oberkante (8) der Seitenwände (2) montiert ist,
**dadurch gekennzeichnet, dass** der Überrollbügel (5) und das übrige Kraftfahrzeug Montageelemente aufweisen, die dazu ausgebildet sind, dass der Überrollbügel (5) vom Benutzer des Kraftfahrzeugs auf einfache Weise aus dem Überrollbügel-Modus demontiert und in zumindest einem, bevorzugt zumindest zwei oder alle drei, der folgenden Modi montiert werden kann: einen Trennelement-Modus, wobei im Trennelement-Modus die Begrenzungswand (6) des Überrollbügels (5) eine vertikale Trennwand oberhalb der Ladefläche (1) bildet und die Montagebasis (7) des Überrollbügels (5) hinter der Begrenzungswand (6) montiert ist; einen Laderaumerweiterungs-Modus, wobei im Laderaumerweiterungs-Modus die Begrenzungswand (6) des Überrollbügels (5) eine vertikale Trennwand oberhalb einer die Ladefläche (1) nach hinten erweiternden Erweiterungsfläche (9) bildet und die Montagebasis (7) des Überrollbügels (5) vor der Begrenzungswand (6) montiert ist; einen Ablage-Modus, wobei im Ablage-Modus die Begrenzungswand (6) des Überrollbügels (5) eine vertikale Wand oberhalb der Ladefläche (1) und direkt benachbart der Vorderwand (3) der Ladefläche (1) bildet und die Montagebasis (7) des Überrollbügels (5) hinter der Begrenzungswand (6) montiert ist.

2. Kraftfahrzeug nach Anspruch 1,
**dadurch gekennzeichnet, dass** der Überrollbügel (5) in einer Seitenansicht auf das Kraftfahrzeug eine Dreiecksform aufweist, wobei bevorzugt die Begrenzungswand (6) des Überrollbügels (5) in dem Überrollbügel-Modus eine vorne am Überrollbügel (5) angeordnete Fläche bildet.

3. Kraftfahrzeug nach Anspruch 1,
**dadurch gekennzeichnet, dass** der Überrollbügel (5) in einer Seitenansicht auf das Kraftfahrzeug eine Viereckform aufweist, wobei bevorzugt die Begrenzungswand (6) des Überrollbügels (5) in dem Überrollbügel-Modus eine oben am Überrollbügel (5) angeordnete Fläche bildet.

4. Kraftfahrzeug nach zumindest einem der vorhergehenden Ansprüche,
**dadurch gekennzeichnet, dass** im Trennelement-Modus und/oder im Laderaumerweiterungs-Modus und/oder im Ablage-Modus die Montagebasis (7) des Überrollbügels (5) unmittelbar oder mittelbar an den die Ladefläche (1) begrenzenden Seitenwänden (2) und/oder an der Ladefläche (1) montiert ist.

5. Kraftfahrzeug nach zumindest einem der vorhergehenden Ansprüche,
**dadurch gekennzeichnet, dass** im Laderaumerweiterungs-Modus die die Ladefläche (1) nach hinten erweiternde Erweiterungsfläche (9) durch eine geöffnete Heckklappe des Kraftfahrzeugs gebildet wird.

6. Kraftfahrzeug nach zumindest einem der vorhergehenden Ansprüche,
**dadurch gekennzeichnet, dass** die Längserstreckung der Begrenzungswand (6) des Überrollbügels (5), die im Kraftfahrzeug in y-Richtung liegt, einstellbar ist, zumindest zwischen zwei oder drei vorgegebenen, bevorzugt einrastenden, Längen.

7. Kraftfahrzeug nach zumindest einem der vorhergehenden Ansprüche,
**dadurch gekennzeichnet, dass** der Überrollbügel (5) Seitenteile (10) aufweist und zumindest einen Mittelteil (11), wobei der Mittelteil (11) gegenüber den Seitenteilen (10) verschieblich gelagert ist.

8. Kraftfahrzeug nach Anspruch 7,
**dadurch gekennzeichnet, dass** die Seitenteile (10) zumindest ein Rohr (12) und/oder zumindest eine Fläche (13) umfassen und der Mittelteil (11) zumindest ein Rohr (14) und/oder zumindest eine Fläche (15) umfassen, wobei das Rohr (14) des Mittelteils (11) gegenüber den Rohren (12) der Seitenteile (10) unterschiedlichen Radius aufweisen und hierdurch gegeneinander verschieblich gelagert sind und/oder wobei die Fläche (15) des Mittelteils (11) oder die Flächen (13) der Seitenteile (10) hohl ausgeführt sind und hierdurch gegeneinander verschieblich gelagert sind.

## Geänderte Patentansprüche

### Geänderte Patentansprüche gemäss Regel 137(2) EPÜ.

1. Kraftfahrzeug, insbesondere Pickup, umfassend eine oben offene Ladefläche (1), begrenzt durch Seitenwände (2), eine Vorderwand (3) und eine Hinterwand (4), wobei das Kraftfahrzeug einen Überrollbügel (5) umfasst, wobei der Überrollbügel (5) zumindest eine Begrenzungswand (6) aufweist, wobei die Begrenzungswand (6) des Überrollbügels (5) in einem Überrollbügel-Modus eine oben am Überrollbügel (5) angeordnete Fläche bildet, die sich im Wesentlichen über die gesamte Breite des Kraftfahrzeugs erstreckt, wobei der Überrollbügel (5) im Überrollbügel-Modus zumindest eine unten am Überrollbügel (5) angeordnete Montagebasis (7) aufweist, wobei der Überrollbügel (5) im Überrollbügel-Modus in einem vorderen Bereich der Ladefläche (1) angeordnet und die Montagebasis (7) des Überrollbügels (5) im Bereich der Oberkante (8) der Seitenwände (2) montiert ist,
**dadurch gekennzeichnet, dass** der Überrollbügel (5) und das übrige Kraftfahrzeug Montageelemente aufweisen, die dazu ausgebildet sind, dass der Überrollbügel (5) vom Benutzer des Kraftfahrzeugs auf einfache Weise aus dem Überrollbügel-Modus demontiert und in zumindest einem, bevorzugt zumindest zwei oder alle drei, der folgenden Modi montiert werden kann: einen Trennelement-Modus, wobei im Trennelement-Modus die Begrenzungswand (6) des Überrollbügels (5) eine vertikale Trennwand oberhalb der Ladefläche (1) bildet und die Montagebasis (7) des Überrollbügels (5) hinter der Begrenzungswand (6) montiert ist;
einen Laderaumerweiterungs-Modus, wobei im Laderaumerweiterungs-Modus die Begrenzungswand (6) des Überrollbügels (5) eine vertikale Trennwand oberhalb einer die Ladefläche (1) nach hinten erweiternden Erweiterungsfläche (9) bildet und die Montagebasis (7) des Überrollbügels (5) vor der Begrenzungswand (6) montiert ist;
einen Ablage-Modus, wobei im Ablage-Modus die Begrenzungswand (6) des Überrollbügels (5) eine vertikale Wand oberhalb der Ladefläche (1) und direkt benachbart der Vorderwand (3) der Ladefläche (1) bildet und die Montagebasis (7) des Überrollbügels (5) hinter der Begrenzungswand (6) montiert ist, wobei der Überrollbügel (5) in einer Seitenansicht auf das Kraftfahrzeug eine Viereckform aufweist.

2. Kraftfahrzeug nach Anspruch 1,
**dadurch gekennzeichnet, dass** im Trennelement-Modus und/oder im Laderaumerweiterungs-Modus und/oder im Ablage-Modus die Montagebasis (7) des Überrollbügels (5) unmittelbar oder mittelbar an den die Ladefläche (1) begrenzenden Seitenwänden (2) und/oder an der Ladefläche (1) montiert ist.

3. Kraftfahrzeug nach zumindest einem der vorhergehenden Ansprüche,
**dadurch gekennzeichnet, dass** im Laderaumerweiterungs-Modus die die Ladefläche (1) nach hinten erweiternde Erweiterungsfläche (9) durch eine geöffnete Heckklappe des Kraftfahrzeugs gebildet wird.

4. Kraftfahrzeug nach zumindest einem der vorhergehenden Ansprüche,
**dadurch gekennzeichnet, dass** die Längserstreckung der Begrenzungswand (6) des Überrollbügels (5), die im Kraftfahrzeug in y-Richtung liegt, einstellbar ist, zumindest zwischen zwei oder drei vorgegebenen, bevorzugt einrastenden, Längen.

5. Kraftfahrzeug nach zumindest einem der vorhergehenden Ansprüche,
**dadurch gekennzeichnet, dass** der Überrollbügel (5) Seitenteile (10) aufweist und zumindest einen Mittelteil (11), wobei der Mittelteil (11) gegenüber den Seitenteilen (10) verschieblich gelagert ist.

6. Kraftfahrzeug nach Anspruch 5,
**dadurch gekennzeichnet, dass** die Seitenteile (10) zumindest ein Rohr (12) und/oder zumindest eine Fläche (13) umfassen und der Mittelteil (11) zumindest ein Rohr (14) und/oder zumindest eine Fläche (15) umfassen, wobei das Rohr (14) des Mittelteils (11) gegenüber den Rohren (12) der Seitenteile (10) unterschiedlichen Radius aufweisen und hierdurch gegeneinander verschieblich gelagert sind und/oder wobei die Fläche (15) des Mittelteils (11) oder die Flächen (13) der Seitenteile (10) hohl ausgeführt sind und hierdurch gegeneinander verschieblich gelagert sind.
